# EUROPÄISCHE PATENTSCHRIFT

(11) **EP 1 133 455 B1**
(45) Veröffentlichungstag und Bekanntmachung des Hinweises auf die Patenterteilung: **08.05.2002**
(21) Anmeldenummer: 99948984.2
(22) Anmeldetag: 14.10.1999
(51) Int. Cl.: C04B 24/26, C04B 28/14, C08F 236/10

(54) **VERWENDUNG VON SCHUTZKOLLOID-STABILISIERTEN VINYLAROMAT-1,3-DIEN-MISCHPOLYMERISATEN ZUR MODIFIZIERUNG VON GIPSWERKSTOFFEN ODER VON WERKSTOFFEN AUF CALCIUMCARBONAT-BASIS**
VINYL AROMATIC-1,3-DIENE COPOLYMERS STABILISED WITH PROTECTION COLLOIDS AND USED FOR MODIFYING MATERIALS CONTAINING PLASTER OR CALCIUM CARBONATE
UTILISATION DE COPOLYMERES CONSTITUES D'UN AROMATIQUE VINYLIQUE ET DE 1,3-DIENE, STABILISES PAR DES COLLOIDES PROTECTEURS, POUR MODIFIER DES MATERIAUX A BASE DE PLATRE OU DE CARBONATE DE CALCIUM

(30) Priorität: 19.11.1998 DE 19853450
(43) Veröffentlichungstag der Anmeldung: 19.09.2001
(73) Patentinhaber: Wacker-Chemie GmbH, 81737 München (DE)
(72) Erfinder: MAYER, Theo, D-84387 Julbach (DE); FRITZE, Peter, D-84533 Haiming (DE); HÄRZSCHEL, Reinhard, D-84489 Burghausen (DE); WEITZEL, Hans-Peter, D-84571 Reischach (DE)
(74) Vertreter: Schuderer, Michael, Dr.
(86) Internationale Anmeldenummer: EP9907707
(87) Internationale Veröffentlichungsnummer: WO0030991

(56) Entgegenhaltungen:
- EP-A- 0 728 715
- WO-A-99/16794
- WO-A-99/28360
- FR-A- 2 348 898

## Beschreibung

Die Erfindung betrifft die Verwendung von Schutzkolloid-stabilisierten Vinylaromat-1,3-Dien-Mischpolymerisaten in Form deren wäßrigen Polymerdispersionen oder in Wasser redispergierbaren Polymerpulver zur Modifizierung von Gipswerkstoffen oder von Werkstoffen auf Calciumcarbonat-Basis.

Gips ist ein in großen Mengen preiswert zur Verfügung stehender Baustoff. Neben natürlich vorkommenden Gipsen werden erhebliche Mengen von Gips aus Rauchgasentschwefelungsanlagen gewonnen, an dessen Verwendung weltweit Interesse besteht. Neben dem Einsatz von Gips in Fugenmassen werden Gipsmörtel vor allem für Innenputze und Beschichtungen eingesetzt. Da Gips unter Volumenzunahme erhärtet, ist er für Beschichtungen und Formkörper das ideale Bindemittel, um etwaige Rißbildungen zu vermeiden. Wegen ihrer Wasserempfindlichkeit, welche sich auch in einem ungenügenden Frost/Tau-Verhalten ausdrückt, dürfen aber laut DIN-Norm 18550 Putze, die als Bindemittel Baugips enthalten, mit und ohne Anteile von Baukalk, nur für Innenputze mit dafür üblicher Beanspruchung, aber nicht für Feuchträume oder für Außenputze eingesetzt werden. Um nun Bauwerkstoffe auf Gipsbasis auch für den Außenbereich und Naßbereich einsetzen zu können, müssen diese ausreichend hydrophobiert werden.

In der DE-A 3704439 (US-A 4851047) wird für die Hydrophobierung von Gipsmörtel die Verwendung von Siliconen und Siloxanen, Stearaten und Paraffinwachsen vorgeschlagen. Die EP-A 320982 beschreibt die Verwendung von Redispersionspulvern auf der Basis von Vinylacetat/Versaticsäure-Vinylester-Copolymeren zur Hydrophobierung von Gipswerkstoffen. Aus der EP-A 477900 ist bekannt, Dispersionspulver-Zusammensetzungen auf der Basis von Vinylester-Polymerisaten oder Styrol-Acrylat-Polymerisaten als Zusatz zur Verbesserung von mechanischen Eigenschaften wie Haftung, Abbriebbeständigkeit und Biegezugfestigkeit in Gips, Bauklebern und Mörteln einzusetzen. In der EP-A 728715 wird zur Gipshydrophobierung der Einsatz von Zusammensetzungen aus Dispersionspulvern und thixotropen Additiven empfohlen, wobei als Dispersionspulver solche auf der Basis von Vinylacetat-Mischpolymerisaten und von Styrol-Acrylsäureester-Mischpolymerisaten empfohlen werden.

Die JP-A 5/836 (Derwent-Abstract AN 93-49422) beschreibt die Hydrophobierung von Zement und Gips mit einem pulverförmigen Gemisch aus Polysiloxan und einem Mischpolymerisat von Vinylaromaten, Dienen und/oder Acrylaten. Die JP-A 57/205352 (Derwent-Abstract AN 83-10505K) beschreibt die Herstellung von wasserbeständigen Gipsformkörpern durch Zugabe von Polymerlatices von Acrylat-, Styrol-, Vinylester- und Epoxidharzen zum Gipsmörtel und anschließender Wärmebehandlung zur Aushärtung der Formkörper.

Nachteilig bei den bisher genannten Hydrophobierungsmitteln ist deren nicht vernachlässigbare Hydrophilie, beispielsweise bei Vinylester- bzw. Acrylsäureester-Polymerisaten, die zu geringer Wasserbeständigkeit führt. Bei den genannten japanischen Veröffentlichungen führt der Emulgatoranteil in den darin verwendeten Latices zu erhöhter Wasseraufnahme. Dies kann zwar durch Zusatz von Additiven wie Siloxanen verbessert werden, aber nur in gewissen Grenzen. In vielen Fällen kann auch die bei der Hydrophobierung erhaltene mechanische Festigkeit nicht befriedigen.

Es bestand somit die Aufgabe, eine Zusammensetzung zur Hydrophobierung von Gipswerkstoffen und von Werkstoffen auf Calciumcarbonat-Basis zur Verfügung zu stellen, welche ohne weitere Additive zu hydrophobierten Werkstoffen mit hoher Wasserbeständigkeit und hoher mechanischer Festigkeit führen.

Gegenstand der Erfindung ist die Verwendung von Schutzkolloid-stabilisierten Vinylaromat-1,3-Dien-Mischpolymerisaten in Form deren wäßrigen Polymerdispersionen oder in Wasser redispergierbaren Polymerpulver zur Modifizierung von Gipswerkstoffen oder von Werkstoffen auf Calciumcarbonat-Basis, wobei die Polymerdispersionen oder Polymerpulver durch Emulsionspolymerisation eines Gemisches enthaltend mindestens einen Vinylaromaten und mindestens ein 1,3-Dien, in Gegenwart von einem oder mehreren Schutzkolloiden und unter Ausschluß von Emulgator, und gegebenenfalls Trocknung der damit erhaltenen wässrigen Polymerdispersionen, erhalten werden.

Geeignete Vinylaromaten sind Styrol und Methylstyrol, vorzugsweise ist Styrol copolymerisiert. Beispiele für 1,3-Diene sind 1,3-Butadien und Isopren, bevorzugt wird 1,3-Butadien. Im allgemeinen enthalten die Copolymerisate 20 bis 80 Gew.-%, vorzugsweise 30 bis 70 Gew.-%, Vinylaromat und 20 bis 80 Gew.-%, vorzugsweise 30 bis 70 Gew.-%, 1,3-Dien, wobei gegebenenfalls noch weitere Monomere enthalten sein können, und sich die Angaben in Gewichtsprozent jeweils auf 100 Gew.-% aufaddieren.

Gegebenenfalls können noch bis zu 30 Gew.-%, bezogen auf das Gesamtgewicht der Monomerphase, weitere mit Vinylaromaten und 1,3-Dienen copolymerisierbare Monomere wie Ethylen, Vinylchlorid, (Meth)acrylsäureester von Alkoholen mit 1 bis 15 C-Atomen oder Vinylester von unverzweigten oder verzweigten Carbonsäuren mit 1 bis 15 C-Atomen copolymerisiert sein.

Gegebenenfalls können noch 0.05 bis 10 Gew.-%, bezogen auf das Gesamtgewicht des Monomergemisches, Hilfsmonomere copolymerisiert sein. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyl-tri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -70°C bis +100°C, vorzugsweise -50°C bis +50°C, besonders bevorzugt -20°C bis +40°C resultiert. Bevorzugt werden Styrol und 1,3-Butadien ohne weitere Comonomere in den genannten Mengenverhältnissen copolymerisiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/T_{g2} + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Geeignete Schutzkolloide sind beispielsweise Polyvinylalkohole, Polysaccharide in wasserlöslicher Form wie Stärken (Amylose und Amylopectin), modifizierte Stärken wie Stärkeether, beispielsweise Hydroxyalkyletherstärken, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate.

Bevorzugt sind Polyvinylalkohole mit einem Hydrolysegrad von 80 bis 95 Mol% und einer Höpplerviskosität, in 4 %-iger wässriger Lösung von 1 bis 30 mPas (Methode nach Höppler bei 20°C, DIN 53015). Geeignet sind auch hydrophob modifizierte Polyvinylalkohole mit einem Hydrolysegrad von 80 bis 95 Mol% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylacetats, wobei die hydrophob modifizierten Polyvinylalkohole eine Oberflächenspannung von < 40 mN/m, in 2 %-iger wässriger Lösung erzeugen. Es können auch Gemische der genannten Polyvinylalkohole eingesetzt werden.

Besonders bevorzugt werden die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester von der Fa. Shell unter den Bezeichnungen VeoVa^{R}5, VeoVa^{R}9, VeoVa^{R}10 und VeoVa^{R}11 angeboten werden. Weitere geeignete Polyvinylalkohole sind teilverseifte, hydrophobierte Polyvinylacetate, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad betragt von 80 bis 95 Mol%, vorzugsweise 85 bis 94 Mol%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol% und einer Höpplerviskosität, in 4 %-iger wässriger Lösung von 2 bis 25 mPas (Methode nach Höppler bei 20°C, DIN 53015) und deren Kombinationen mit den genannten, hydrophob modifizierten Polyvinylestern in einem Gewichtsverhältnis von 10/1 bis 1/10. Die genannten Schutzkolloide sind mittels dem Fachmann bekannter Verfahren zugänglich.

Die Herstellung der schutzkolloidstabilisierten Polymerdispersionen erfolgt nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln wie Natriumsulfit, Natriumhydroxymethansulfinat, Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels der genannten Schutzkolloide ohne zusätzliche Emulgatoren. Vorzugsweise wird der Schutzkolloid-Anteil dabei teilweise vorgelegt und teilweise nach Initiierung der Polymerisation zudosiert. Im allgemeinen wird in Gegenwart von 1 bis 25 Gew.-% Schutzkolloid, bezogen auf das Gesamtgewicht der Monomere, polymerisiert. Die Monomere können insgesamt vorgelegt werden, insgesamt zudosiert werden oder in Anteilen vorgelegt werden und der Rest nach der Initiierung der Polymerisation zudosiert werden. Ein geeignetes Herstellungsverfahren ist beispielsweise in der PCT-Anmeldung PCT/EP98/06102 beschrieben, deren diesbezügliche Offenbarung Teil dieser Anmeldung sein soll.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen enthalten im allgemeinen 1 bis 25 Gew.-% Schutzkolloid, bezogen auf den Polymeranteil, und haben einen Feststoffgehalt von 30 bis 75 Gew.-%, vorzugsweise von 40 bis 65 Gew.-%.

Zur Herstellung der in Wasser redispergierbaren Polymerpulver werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew.-%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel beträgt der Anteil an Schutzkolloid vor der Verdüsung der Dispersion 5 bis 25 Gew.-%, bezogen auf den Polymeranteil.

Geeignete Verdüsungshilfen sind teilverseifte Polyvinylacetate; Polyvinylpyrrolidone; Polysaccharide in wasserlöslicher Form wie Stärken (Amylose und Amylopectin), modifizierte Stärken wie Stärkeether, beispielsweise Hydroxyalkyletherstärken; Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol%, einer Höppler-Viskosität von 1 bis 30 mPas, welche gegebenenfalls wie oben angegeben hydrophob modifiziert sein können.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Unter den Gipsarten sind α- und β-Halbhydrat (CaSO₄ 1/2 H₂O) in Form von beispielsweise Baugips, Stuckgips, Hartformgips oder Modellgips bevorzugt. Es können aber auch andere Gipsarten modifiziert werden, wie Estrichgips, Marmorgips, Dihydrat und Anhydrit. Gut geeignet ist auch das bei der Rauchgasentschwefelung anfallende Calciumsulfat (REA-Gips).

Die Gipszusammensetzung kann weiter die üblichen Zuschläge und Zusatzstoffe enthalten. Übliche Zuschläge für Gipsmörtel sind Kalkhydrat zu vorzugsweise 1 bis 30 Gew.-% sowie inerte Füllstoffe wie Calciumcarbonat, Dolomit, Tonmineralien wie Talk, Glimmer, Kaolin und/oder Quarzsand in üblichen Mengen, vorzugsweise zu 5 bis 90 Gew.-%. Die Angaben in Gew.-% beziehen sich jeweils auf das Gesamtgewicht der pulverförmigen Gipszusammensetzung.

Zusätze, die die Verarbeitbarkeit der Gips- bzw. Calciumcarbonat-Zusammensetzungen bzw. die Eigenschaften damit gefertigter Produkte verbessern, sind beispielsweise Salze langkettiger Fettsäuren wie Ca-Stearat, Na-Oleat, Siliconbautenschutzmittel, Fungizide, Faserstoffe, Beschleuniger wie Di-Kaliumhydrogensulfat, Verzögerer wie Tartrate, Phosphate, Proteinderivate, Verdickungsmittel wie Celluloseether, Stärkeether, Dextrine, Bentonite.

Das Schutzkolloid-stabilisierte Vinylaromat-1,3-Dien-Mischpolymerisat wird im allgemeinen in einer Menge von 0.2 bis 15 Gew.-%, bezogen auf das Trockengewicht der Rezeptur eingesetzt. Zur Modifizierung der Gips- bzw. CaCO₃-Werkstoffe wird das Dispersionspulver bzw. die Dispersion dazu in geeigneten Mischern mit dem Gips bzw. dem Calciumcarbonat und gegebenenfalls weiteren Zuschlägen und Zusatzstoffen gemischt und homogenisiert. Vorzugsweise wird mittels Dispersionspulver eine trockene Zusammensetzung hergestellt und das zur Verarbeitung erforderliche Wasser an der Baustelle vor der Verarbeitung zugemischt.

Die erfindungsgemäß modifizierten Zusammensetzungen eignen sich vor allem für die Verwendung als Gipsmörtel für Spachtelmassen, Joint-Filler, CaS04-Fließestriche, Fugenmassen, Klebemörtel oder die Verwendung zur Herstellung von Gipsplatten oder Gipsformen. Weitere Anwendungen sind beispielsweise Putze oder Stukkaturen, auch im Außenbereich. Die üblichen Anwendungen für die entsprechend modifizierten CaCO₃-Werkstoffe sind Jointfiller (Fugenfüller), gipsfreie Spachtelmassen und Putze.

Mit der erfindungsgemäßen Hydrophobierung wurde gefunden, daß die mechanischen Eigenschaften von Gips- bzw. CaCO₃-Werkstoffen wie z.B. Haftzugfestigkeit, Biegezugfestigkeit, Druckfestigkeit, Abriebsbeständigkeit, Wasseraufnahme und damit die Bewitterungsbeständigkeit von Spachtelmassen entscheidend verbessert werden.

Die nachfolgenden Beispiele dienen zur weiteren Erläuterung der Erfindung:

### Herstellung der Mörtelmischung:

In den Beispielen 1 bis 6 wurden Gipsmörtel bzw. CaCO₃-Mörtel mit den in den Tabellen 1 und 2 angegebenen Basisrezepturen 1 und 2 hergestellt. Dazu wurden die Rezepturbestandteile trokken vorgemischt, der Wasseranteil in einem Mörtelmischer vorgelegt und die Trockenmischung eingerührt.

**Tabelle 1:**

| Basisrezeptur 1 (Gipsmörtel) | | |
|---|---|---|
| 660 | Gewichtsteile | Gips (Primoplast) |
| 300 | " | CaCO₃ (Carborex 20) |
| 2 | " | Celluloseether (CulminalC8031) |
| 1 | " | Stärkeether (Amylotex7086) |
| 1 | " | Kaliumdihydrogenphosphat |
| 450 | " | Wasser |

**Tabelle 2:**

| Basisrezeptur 2 (CaCO₃-Jointfiller) | | |
|---|---|---|
| 965 | " | CaCO₃ (Durcal 40) |
| 5 | " | Celluloseether (Walocel MKX) |
| 30 | " | Styrol-1,3-Butadien-Copolymer |
| 400 | " | Wasser |

### Vergleichsbeispiel 1:

In die Basisrezeptur 1 wurden noch 60 Gewichtsteile einer emulgatorstabilisierten, wäßrigen Dispersion (Festgehalt: 50 %) eines Styrol-1,3-Butadien-Copolymerisats mit einem Styrolgehalt von 65 Gew.-% und einem 1,3-Butadien-Gehalt von 35 Gew.-% eingearbeitet und 420 Gewichtsteile anstelle der 450 Gewichtsteile Wasser eingesetzt.

### Vergleichsbeispiel 2:

In die Basisrezeptur 1 wurden noch 60 Gewichtsteile einer emulgatorstabilisierten, wäßrigen Dispersion (Festgehalt: 50 %) eines Styrol/Acrylsäureester-Copolymerisates (45 Gew.-% Styrol; 55 Gew.-% Butylacrylat) eingearbeitet und 420 Gewichtsteile anstelle der 450 Gewichtsteile Wasser eingesetzt.

### Beispiel 3:

In die Basisrezeptur 1 wurden noch 30 Gewichtsteile eines Dispersionspulver auf der Basis eines Styrol-1,3-Butadien-Copolymerisates mit einem Styrol-Gehalt von 65 Gew.-% und einem 1,3-Butadien-Gehalt von 35 Gew.-%, welches mit 12 Gew.-% eines teilhydrolisierten Polyvinylalkohols mit einem Hydrolysegrad von 88 Mol% und einer Höppler-Viskosität von 4 mPas stabilisiert war, eingearbeitet.

### Vergleichsbeispiel 4:

In die Basisrezeptur 2 wurden 60 Gewichtsteile einer emulgatorstabilisierten, wäßrigen Dispersion (Festgehalt: 50 %) eines Styrol-1,3-Butadien-Copolymerisats mit einem Styrolgehalt von 65 Gew.-% und einem 1,3-Butadien-Gehalt von 35 Gew.-% eingearbeitet, und 370 Gewichtsteile anstelle der 400 Gewichtsteile Wasser eingesetzt.

### Vergleichsbeispiel 5:

In die Basisrezeptur 2 wurden 60 Gewichtsteile einer emulgatorstabilisierten, wäßrigen Dispersion (Festgehalt: 50 %) eines Styrol/Acrylsäureester-Copolymerisates (45 Gew.-% Styrol; 55 Gew.-% Butylacrylat) eingearbeitet und 370 Gewichtsteile anstelle der 400 Gewichtsteile Wasser eingesetzt.

### Beispiel 6:

In die Basisrezeptur 2 wurden 30 Gewichtsteile eines Dispersionspulver auf der Basis eines Styrol-1,3-Butadien-Copolymerisates mit einem Styrol-Gehalt von 65 Gew.-% und einem 1,3-Butadien-Gehalt von 35 Gew.-%, welches mit 12 Gew.-% eines teilhydrolisierten Polyvinylalkohols mit einem Hydrolysegrad von 88 Mol% und einer Höppler-Viskosität von 4 mPas stabilisiert war, eingearbeitet.

### Anwendungstechnische Prüfung:

### Prüfung der Haftzugfestigkeit:

Zur Prüfung der Haftzugfestigkeit wurden die Gipszubereitungen bzw. CaCO₃-Zubereitungen aus den Beispielen mit Schablonen auf Betonplatten in einer Schichtdicke von 5 mm aufgezogen. Die Betonplatten mit den aufgezogenen Mörteln wurden 10 Tage bei Normklima gelagert. Einen Tag vor Prüftermin wurden mit einer Bohrmaschine mit Bohrkrone, Durchmesser 55 mm, je 6 Probekörper ausgebohrt. Auf die Probekörper wurden dann mit einem 2-Komponentenkleber Abzugskrampen aufgeklebt. Die Haftzugfestigkeit wurde nach DIN 18156 mit einem Abzugsgerät der Fa. Herion, mit einer Laststeigerungsrate von 250 N/s bestimmt. Die Mittelwerte für die Haftzugfestigkeit der einzelnen Meßreihen sind in den Tabellen 3 und 4 aufgeführt.

### Prüfung des Verarbeitungsverhaltens:

Das Verarbeitungsverhalten beim Auftragen der Gips- bzw. CaCO₃-Zubereitungen auf die Betonplatten wurde subjektiv mit Noten von 1 bis 5 bewertet, wobei "1" für "sehr gut" und "5" für "schlecht" steht. Die Ergebnisse sind in den Tabellen 3 und 4 aufgeführt.

### Prüfung der Härte der Gipsmörtel:

Die Härte der Gipsmörtel wurde nach Ablauf der oben erwähnten 10-tägigen Lagerzeit subjektiv mit Noten von 1 bis 5 bewertet, wobei "1" für "sehr hart" und "5" für "sehr weich" steht. Die Ergebnisse sind in den Tabellen 3 und 4 aufgeführt.

### Prüfung der Wasseraufnahme (Wassertropfentest):

Zur Prüfung der Wasseraufnahme (Hydrophobierung) wurde nach Ablauf der 10-tägigen Lagerzeit ein Wassertropfen mit einem Volumen von 0.5 ml mittels einer Pipette auf die Oberfläche der Gipsmörtel appliziert und die Zeit bis zum Wegschlagen des Tropfens ermittelt. Die Ergebnisse sind in den Tabellen 3 und 4 aufgeführt.

**Tabelle 3:**

| Versuchsergebnisse mit Basisrezeptur 1 (Gipsmörtel) | | | |
|---|---|---|---|
| Rezeptur | V.Bsp.1 | V.Bsp.2 | Bsp. 3 |
| | [Gew.T] | [Gew.T] | [Gew.T] |
| Primoplast | 660 | 660 | 660 |
| Carborex 20 | 300 | 300 | 300 |
| Culminal C 8031 | 2 | 2 | 2 |
| Amylotex 7086 | 1 | 1 | 1 |
| KH₂PO₄ | 1 | 1 | 1 |
| Wasser | 420 | 420 | 450 |
| Disp.pulver/Dispersion | 60 | 60 | 30 |
| Verarbeitung | 4 | 3 | 2 |
| Härte (Kratztest) | 3 | 2 | 1 |
| Haftzugfestigkeit [N/mm²] | 0.68 | 0.95 | 1.31 |
| Wassertropfentest [min} | 40 | 45 | 90 |

**Tabelle 4:**

| Versuchsergebnisse mit Basisrezeptur 2 (CaCO₃-Jointfiller) | | | |
|---|---|---|---|
| Rezeptur | V.Bsp.4 | V.Bsp.5 | Bsp. 6 |
| | [Gew.T] | [Gew.T] | [Gew.T] |
| Durcal 40 | 965 | 965 | 965 |
| Walocel MKX | 5 | 5 | 5 |
| Wasser | 370 | 370 | 400 |
| Disp.pulver/Dispersion | 60 | 60 | 30 |
| Verarbeitung | 4 | 3 | 2 |
| Härte (Kratztest) | 2 | 2 | 1 |
| Haftzugfestigkeit [N/mm²] | 0.42 | 0.53 | 1.04 |
| Wassertropfentest [min} | 45 | 52 | 110 |

Die Ergebnisse in den Tabellen 3 und 4 zeigen, daß sowohl bei der Verwendung in Gipswerkstoffen, als auch bei der Verwendung in CaCO₃-Werkstoffen, die Schutzkolloid-stabilisierten Styrol-Butadien-Copolymeren den mit Emulgator stabilisierten, sowohl bezüglich der Verarbeitungund mechanischen Härte, als auch bezüglich der Hydrophobierung überlegen sind. Gleiches gilt auch im Vergleich mit herkömmlichen Styrolacrylat-Copolymeren.

## Patentansprüche

1. Verwendung von Schutzkolloid-stabilisierten Vinylaromat-1,3-Dien-Mischpolymerisaten in Form deren wäßrigen Polymerdispersionen oder in Wasser redispergierbaren Polymerpulver zur Modifizierung von Gipswerkstoffen oder von Werkstoffen auf Calciumcarbonat-Basis, wobei die Polymerdispersionen oder Polymerpulver durch Emulsionspolymerisation eines Gemisches enthaltend mindestens einen Vinylaromaten und mindestens ein 1,3-Dien, in Gegenwart von einem oder mehreren Schutzkolloiden und unter Ausschluß von Emulgator, und gegebenenfalls Trocknung der damit erhaltenen wässrigen Polymerdispersionen, erhalten werden.

2. Verwendung nach Anspruch 1, **dadurch gekennzeichnet, daß** als Vinylaromat 20 bis 80 Gew.-% Styrol, als 1,3-Dien 20 bis 80 Gew.-% 1,3-Butadien, gegebenenfalls in Gegenwart weiterer Comonomere, polymerisiert werden.

3. Verwendung nach Anspruch 1 und 2, **dadurch gekennzeichnet, daß** als Schutzkolloide ein oder mehrere Polyvinylalkohole, Stärken, modifizierte Stärken wie Stärkeether, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate eingesetzt werden.

4. Verwendung nach Anspruch 1 bis 3, **dadurch gekennzeichnet, daß** als Schutzkolloide ein oder mehrere, gegebenenfalls hydrophob modifizierte, Polyvinylalkohole mit einem Hydrolysegrad von 80 bis 95 Mol% und einer Höpplerviskosität, in 4 %-iger wässriger Lösung von 1 bis 30 mPas eingesetzt werden.

5. Verwendung nach Anspruch 1 bis 4, **dadurch gekennzeichnet, daß** die Schutzkolloid-stabilisierten Vinylaromat-1,3-Dien-Mischpolymerisaten in Form deren wäßrigen Polymerdispersionen oder in Wasser redispergierbaren Polymerpulver in Gipsmörteln für Spachtelmassen, Joint-Filler, CaSO₄-Fließestrichen, Fugenmassen, Klebemörteln verwendet werden.

6. Verwendung nach Anspruch 1 bis 4, **dadurch gekennzeichnet, daß** die Schutzkolloid-stabilisierten Vinylaromat-1,3-Dien-Mischpolymerisaten in Form deren wäßrigen Polymerdispersionen oder in Wasser redispergierbaren Polymerpulver zur Herstellung von Gipsplatten oder Gipsformen verwendet werden.

7. Verwendung nach Anspruch 1 bis 4, **dadurch gekennzeichnet, daß** die Schutzkolloid-stabilisierten Vinylaromat-1,3-Dien-Mischpolymerisaten in Form deren wäßrigen Polymerdispersionen oder in Wasser redispergierbaren Polymerpulver in Putzen oder Stukkaturen verwendet werden.

8. Verwendung nach Anspruch 1 bis 4, **dadurch gekennzeichnet, daß** die Schutzkolloid-stabilisierten Vinylaromat-1,3-Dien-Mischpolymerisaten in Form deren wäßrigen Polymerdispersionen oder in Wasser redispergierbaren Polymerpulver in Fugenfüllern, gipsfreien Spachtelmassen und Putzen verwendet werden.

## Claims

1. Use of protective colloid-stabilized vinylaromatic-1,3-diene copolymers in the form of their aqueous polymer dispersions or polymer powders which are redispersible in water for the modification of gypsum-based materials or of materials based on calcium carbonate, wherein the polymer dispersions or polymer powders are obtained by emulsion polymerization of a mixture comprising at least one vinylaromatic and at least one 1,3-diene, in the presence of one or more protective colloids and in the absence of emulsifiers, and, if desired, drying of the aqueous polymer dispersions obtained in this way.

2. Use according to Claim 1, **characterized in that** from 20 to 80% by weight of styrene as vinylaromatic and from 20 to 80% by weight of 1,3-butadiene as 1,3-diene are polymerized in the presence or absence of further comonomers.

3. Use according to Claim 1 or 2, **characterized in that** protective colloids used are one or more polyvinyl alcohols, starches, modified starches such as starch ethers, dextrins and cyclodextrins, celluloses and their carboxymethyl, methyl, hydroxyethyl or hydroxypropyl derivatives, poly(meth)acrylic acid, poly(meth)acrylamide, melamine formaldehyde sulphonates and naphthalene formaldehyde sulphonates.

4. Use according to any of Claims 1 to 3, **characterized in that** protective colloids used are one or more unmodified or hydrophobically modified polyvinyl alcohols having a degree of hydrolysis of from 80 to 95 mol% and a Höppler viscosity in 4% strength aqueous solution of from 1 to 30 mPas.

5. Use according to any of Claims 1 to 4, **characterized in that** the protective colloid-stabilized vinylaromatic-1,3-diene copolymers in the form of their aqueous polymer dispersions or polymer powders which are redispersible in water are used in gypsum mortars for knifing fillers, joint fillers, CaSO₄ flow screeds, jointing compositions and adhesive mortars.

6. Use according to any of Claims 1 to 4, **characterized in that** the protective colloid-stabilized vinylaromatic-1,3-diene copolymers in the form of their aqueous polymer dispersions or polymer powders which are redispersible in water are used for producing plasterboards or plaster molds.

7. Use according to any of Claims 1 to 4, **characterized in that** the protective colloid-stabilized vinylaromatic-1,3-diene copolymers in the form of their aqueous polymer dispersions or polymer powders which are redispersible in water are used in plasters or renders or stucco work.

8. Use according to any of Claims 1 to 4, **characterized in that** the protective colloid-stabilized vinylaromatic-1,3-diene copolymers in the form of their aqueous polymer dispersions or polymer powders which are redispersible in water are used in joint fillers, gypsum-free knifing fillers and plasters and renders.

## Revendications

1. Utilisation de copolymères d'aromatique de vinyle et de 1,3-diène stabilisés par des colloïdes de protection sous forme de leurs dispersions aqueuses de polymère ou de leurs poudres de polymère redispersibles dans l'eau pour la modification de matériaux à base de plâtre ou de matériaux à base de carbonate de calcium, les dispersions de polymère ou les poudres de polymère étant obtenues par polymérisation dans une émulsion d'un mélange contenant au moins un aromatique de vinyle et au moins un 1,3-diène, en présence d'un ou de plusieurs colloïdes de protection et en excluant un émulsifiant, et le cas échéant séchage des dispersions aqueuses de polymère ainsi obtenues.

2. Utilisation selon la revendication 1, **caractérisée en ce qu'**on polymérise comme aromatique de vinyle, 20 à 80% de styrène, comme 1,3-diène, 20 à 80% de 1,3-butadiène, le cas échéant en présence d'autres comonomères.

3. Utilisation selon les revendications 1 et 2, **caractérisée en ce qu'**on utilise comme colloïdes de protection un ou plusieurs poly(alcools vinyliques), amidons, amidons modifiés, tels que des amidon-éthers, dextrines et cyclodextrines, celluloses et leurs dérivés à base de carboxyméthyle, méthyle, hydroxyéthyle, hydroxypropyle, poly(acides (méth)acryliques), poly((méth)acrylamides), mélamineformaldéhydesulfonates, naphtalèneformaldéhydesulfonates.

4. Utilisation selon les revendications 1 à 3, **caractérisée en ce qu'**on utilise comme colloïdes de protection un ou plusieurs poly(alcools vinyliques), le cas échéant modifiés de manière hydrophobe, présentant un degré d'hydrolyse de 80 à 95% en mole et une viscosité de Höppler, dans une solution aqueuse à 4%, de 1 à 30 mPa.s.

5. Utilisation selon les revendications 1 à 4, **caractérisée en ce que** les copolymères d'aromatique de vinyle et de 1,3-diène stabilisés par des colloïdes de protection sont utilisés sous forme de leurs dispersions aqueuses de polymère ou de leurs poudres de polymère redispersibles dans l'eau dans des mortiers à base de plâtre pour des masses bouche-pores, des pâtes d'étanchéité pour joints, des chapes égalisatrices à base de CaSO₄, des masses de rejointoiement, des mortiers colles.

6. Utilisation selon les revendications 1 à 4, **caractérisée en ce que** les copolymères d'aromatique de vinyle et de 1,3-diène stabilisés par des colloïdes de protection sont utilisés sous forme de leurs dispersions aqueuses de polymère ou de leurs poudres de polymère redispersibles dans l'eau pour la fabrication de plaques de plâtre ou de moules en plâtre.

7. Utilisation selon les revendications 1 à 4, **caractérisée en ce que** les copolymères d'aromatique de vinyle et de 1,3-diène stabilisés par des colloïdes de protection sont utilisés sous forme de leurs dispersions aqueuses de polymère ou de leurs poudres de polymère redispersibles dans l'eau dans des enduits ou des stucages.

8. Utilisation selon les revendications 1 à 4, **caractérisée en ce que** les copolymères d'aromatique de vinyle et de 1,3-diène stabilisés par des colloïdes de protection sont utilisés sous forme de leurs dispersions aqueuses de polymère ou de leurs poudres de polymère redispersibles dans l'eau dans des masses de rejointoiement, des masses bouche-pores exemptes de plâtre et des enduits exempts de plâtre.
